# EUROPEAN PATENT APPLICATION

(11) **EP 2 458 851 A2**
(43) Date of publication of application: **30.05.2012**
(21) Application number: 11169968.2
(22) Date of filing: 15.06.2011
(51) Int. Cl.: H04N 5/76, H04N 5/783, H04N 21/431, H04N 21/433, H04N 21/426, H04N 5/775, H04N 21/422

(54) **Replay device and replay method**

(30) Priority: 30.11.2010 JP 2010267878
(71) Applicant: Kabushiki Kaisha Toshiba, Tokyo 105-8001 (JP)
(72) Inventor: Yoshida, Shingo, Tokyo 105-8001 (JP)
(74) Representative: HOFFMANN EITLE

(57) **Abstract**

According to one embodiment, a replay device (100) includes a repaying module (118), a speed controller (117a), a setting module (117b), and a continuous replay controller (117c). The replaying module (118) replays content data. The speed controller (117a) controls the replay speed of the content data replayed by the replaying module (118). The setting module (117b) sets a plurality of replay positions in the content data while the replaying module (118) is fast-replaying the content data at a replay speed higher than a predetermined replay speed. The continuous replay controller (117c) controls the replaying module (118) to replay a plurality of pieces of data near the replay positions set by the setting module (117b) in the content data at the predetermined replay speed.

## Description

### FIELD

Embodiments described herein relate generally to a replay device and a replay method.

### BACKGROUND

Recently, a time shifting function for simultaneous recording of programs of multiple channels in the same time slot allows a user to record and to watch programs of multiple channels over a day. However, if programs on multiple channels over a day are recorded using the time shifting function, an enormous number of programs end up being recorded. Therefore, not only it takes a long time to watch all the programs thus recorded, but also it is difficult to retrieve a program the user wishes to watch. In particular, it is difficult to retrieve a new program the user usually does not watch from the programs recorded by the time shifting function.

Therefore, as a viewing style, replaying the content of a long program recorded by the time shifting function at a high speed is adopted to reduce the viewing time. However, when such high speed replaying of the content is adopted, it is difficult to understand details of the program the user is watching.

In response to this issue, there has been proposed a conventional technology in which, when a user presses a marking key on a remote controller while a content is being replayed at a high speed, the desired video scene is specified as a marked position, and the content is reversed by a predetermined amount from the specified marked position and replayed not at a high speed. In addition, there has been proposed another conventional technology that replays each song (content) stored in a disk for a predetermined time sequentially.

The conventional technology enables a user to easily retrieve a desired video scene and to understand details of the desired video scene. However, setting of the marked position and the slow replay of the content are performed every time the user finds a desired video scene. Therefore, when there are a plurality of desired video scenes in an enormous number of programs recorded by the time shifting function, the user cannot watch only the desired video scenes continuously. Besides, although the other conventional technology enables a user to listen to a song stored in the disk in detail, because the part replayed for the predetermined time is preset, the user cannot listen to only a desired part.

### SUMMARY

In general, according to one embodiment, a replay device comprises a replaying module, a speed controller, a setting module, and a continuous replay controller. The replaying module is configured to replay content data. The speed controller is configured to control the replay speed of the content data replayed by the replaying module. The setting module is configured to set a plurality of replay positions in the content data while the replaying module is fast-replaying the content data at a replay speed higher than a predetermined replay speed. The continuous replay controller is configured to control the replaying module to replay a plurality of pieces of data near the replay positions set by the setting module in the content data at the predetermined replay speed.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1A is an exemplary block diagram of a configuration of a multi-channel receiver according to an embodiment;
FIG. 1B is an exemplary plan view of an exterior of a remote controller in the embodiment;
FIG. 2 is an exemplary block diagram of a configuration of a tuner in the embodiment;
FIG. 3 is an exemplary flowchart of a replaying operation of partial content data performed by the multi-channel receiver in the embodiment;
FIG. 4 is an exemplary detailed flowchart of the replaying operation of the partial content data performed by the multi-channel receiver in the embodiment;
FIG. 5 is an exemplary schematic diagram of one way of fast-replaying content data on a plurality of channels in the embodiment;
FIG. 6 is an exemplary schematic diagram of another way of fast-replaying content data on a plurality of channels in the embodiment;
FIG. 7 is an exemplary schematic diagram of thumbnail images displayed while the content data is fast-replayed in the embodiment;
FIG. 8 is an exemplary schematic diagram of a list of identification information in the embodiment;
FIG. 9 is an exemplary schematic diagram for explaining a process of shifting a specified replay position before replaying the partial content data in the embodiment;
FIG. 10 is another exemplary schematic diagram for explaining a process of shifting a specified replay position before replaying the partial content data in the embodiment;
FIG. 11 is an exemplary schematic diagram of how the thumbnail images are displayed while the partial content data is being replayed in the embodiment; and
FIG. 12 is an exemplary schematic diagram of a selection dialog displayed every time replaying of a piece of partial content data is completed in the embodiment.

### DETAILED DESCRIPTION

Exemplary embodiments will be described in detail below with reference to the accompanying drawings. In the following, an embodiment will be described as being applied to a multi-channel receiver that is capable of recording content data of programs (content) on a plurality of channels simultaneously and of replaying content data thus recorded simultaneously, such as a hard disk driver (HDD) recorder and an HDD and digital versatile disk (DVD) recorder. However, the embodiment may also be applied to a television receiver comprising a liquid crystal display, a plasma display, or the like that is capable of recording content data of programs on a plurality of channels simultaneously to a built-in HDD, for example.

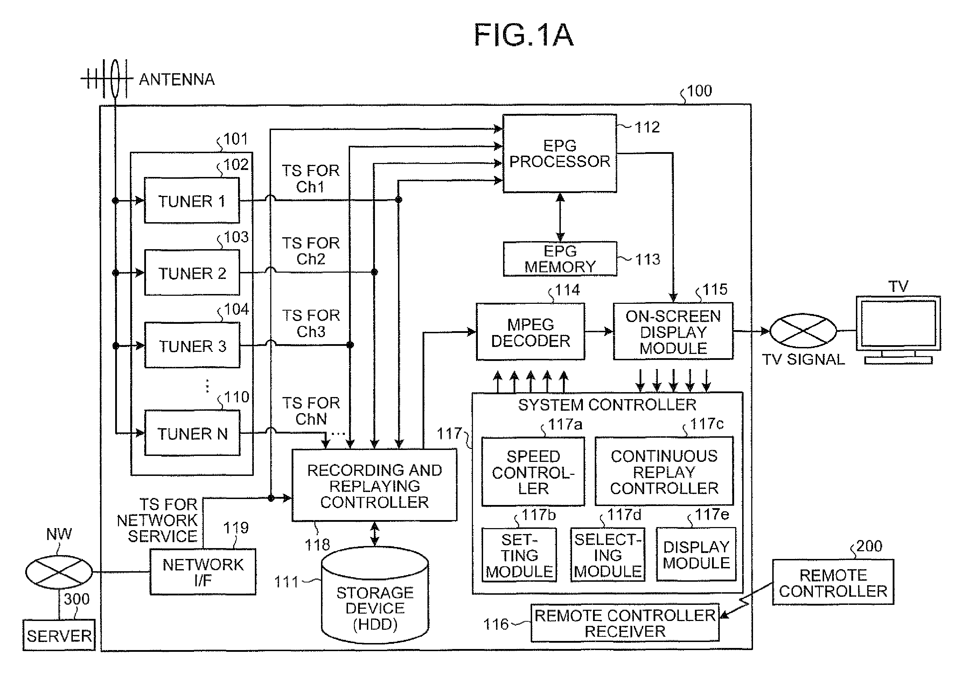

FIG. 1A is a block diagram of an example of a configuration of a multi-channel receiver 100 according to the embodiment. As illustrated in FIG. 1A, the multi-channel receiver 100 comprises a tuner device 101, a storage device 111, an electronic program guide (EPG) processor 112, an EPG memory 113, a Moving Picture Experts Group (MPEG) decoder 114, an on-screen display module 115, a remote controller receiver 116, a system controller 17, a recording and replaying controller 118, and a network interface (I/F) 119. The multi-channel receiver 100 can access a communication network NW via the network I/F 119 to use a network service provided by a server 300 on the communication network NW.

The server 300 provides a network service of providing a program requested by an information device connected over the communication network NW as video-on-demand. The server 300 also transmits metadata containing information about programs that can be provided (distributed) by the server 300 in response to a request issued by an information device connected over the communication network NW.

The tuner device 101 uses a plurality of tuners for receiving transport streams (TS) on a plurality of channels. Content data of programs are multiplexed into a transport stream, and content data of programs on these channels are simultaneously recorded on the storage device 111 such as an HDD. The transport stream received by the tuner device 101 may contain one-segment broadcasting or full-segment broadcasting. In this embodiment, the tuner device 101 comprises tuners 102 to 110 for receiving transport streams for N channels of Ch1 to ChN. The transport streams for Ch1 to ChN output from the tuners 102 to 110 are sent to the EPG processor 112 and to the recording and replaying controller 118. The number of tuners is not limited to the nine tuners 102 to 110, and may be any number.

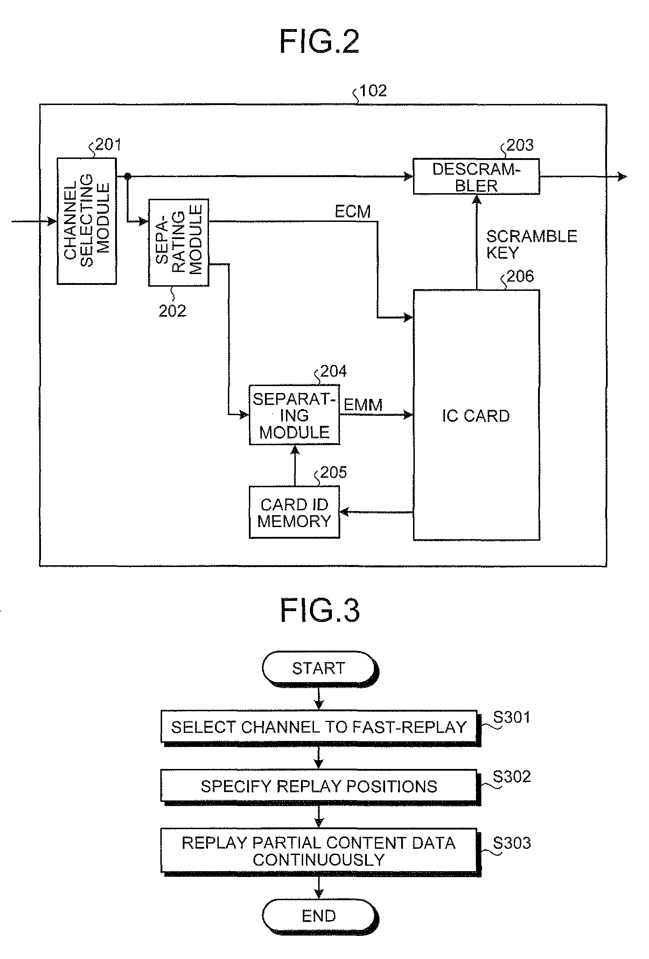

A detailed configuration of the tuners 102 to 110 of the embodiment will now be described with reference to FIG. 2. FIG. 2 is a block diagram of an example of a configuration of the tuners 102 to 110. The tuners 102 to 110 are of like configuration and thus but one of them, for example, the tuner 102 will be described below. As illustrated in FIG. 2, the tuner 102 comprises a channel selecting module 201, a separating module 202, a descrambler 203, a separating module 204, a card identification (ID) memory 205, and an integrated circuit (IC) card 206.

The channel selecting module 201 selects a channel from an antenna input. The transport stream for the selected channel is input to the separating module 202 and the descrambler 203. The separating module 202 separates a control data entitlement control message (ECM) multiplexed into the transport stream, and inputs the control data ECM thus separated to the IC card 206. The separating module 204 separates an entitlement management message (EMM) for the IC card 206 from control data EMM multiplexed into the transport stream, and inputs the EMM thus separated to the IC card 206. The separating module 204 separates the EMM for the IC card 206 using a card ID output from the IC card 206 and set in the card ID memory 205.

The IC card 206 decodes a scramble key using the received control data ECM and control data EMM. The descrambler 203 descrambles the content data multiplexed into the transport stream using the scramble key decoded by the IC card 206, and outputs the content data. In this embodiment, each tuner has the IC card 206. However, a plurality of tuners may share an IC card.

Referring back to FIG. 1A, the storage device 111 is a large capacity storage medium such as an HDD. The storage device 111 stores (records) content data under the control of the recording and replaying controller 118. The content data stored in the storage device 111 is read and replayed under the control of the recording and replaying controller 118.

The EPG processor 112 extracts EPG information (service information (SI)) indicating programs on respective channels in each time slot (programs to be distributed) from the transport streams for Ch1 to ChN output from the tuners 102 to 110, and stores the EPG information in the EPG memory 113.

The EPG processor 112 stores metadata collected from the server 300 connected over the communication network NW and via the network I/F 119 in the EPG memory 113. The metadata contains, for example, dynamic electronic program guide (DEPG) that is information about programs distributed (including those to be distributed) by the server 300 to information devices connected over the communication network NW. In other words, metadata is information about programs provided by a network service of the server 300 as video-on-demand. To collect the metadata, the EPG processor 112 may extract the metadata from the transport stream of the program provided by a network service of the server 300, or may specify the uniform resource locator (URL) to download the metadata directly from the server 300. In the embodiment, the signal format of programs provided by a network service is described as a transport stream equivalent to broadcasting signals. However, other formats such as a program stream may be used. In such a case, the multi-channel receiver 100 may require a separating module, a decoding module, a receiving buffer, and the like depending on the signal format.

In the embodiment, an example is described in which EPG information of each channel is extracted from each transport stream for Ch1 to ChN in the same manner as in Japanese terrestrial digital broadcasting. However, extraction of EPG information is not limited thereto. For example, in some cases, e.g., in the broadcasting satellite (BS) digital broadcasting, the EPG information for all of the channels is multiplexed and distributed over each channel. Furthermore, the EPG information contained in each of the transport streams for Ch1 to ChN may also contain information about whether a program in each time slot is provided by a network service of the server 300 as video-on-demand.

The EPG processor 112 obtains the EPG information stored in the EPG memory 113 in response to a pressing operation of a program guide button and the like arranged on a remote controller 200, and sends program guide data containing a program guide in which the EPG information thus obtained is arranged in time-series to the on-screen display module 115 to display the program guide on a television (TV). To constantly update the EPG information stored in the EPG memory 113, the EPG processor 112 extracts the EPG information from each of the transport streams for Ch1 to ChN, and updates the EPG information stored in the EPG memory 113 with the extracted EPG information.

The MPEG decoder 114 performs MPEG-2 decoding on the content data received from the recording and replaying controller 118, and supplies the MPEG-2-decoded content data to the on-screen display module 115. The on-screen display module 115 supplies the program guide data received from the EPG processor 112 and the content data received from the MPEG decoder 114 to the TV as TV signals. In this manner, the TV can display a program guide, a program received by the tuner device 101, a program provided by the network service of the server 300, and a program stored in the storage device 111.

The remote controller receiver 116 receives a signal transmitted from the remote controller 200 via infrared or other wireless means. The remote controller 200 receives a user operation, and transmits a signal corresponding to the user operation to the remote controller receiver 116 via infrared or other wireless means. In other words, the multi-channel receiver 100 is configured to receive a user operation via the remote controller 200. Alternatively, the multi-channel receiver 100 may receive a user operation via operation keys or a touch panel (neither of which is illustrated).

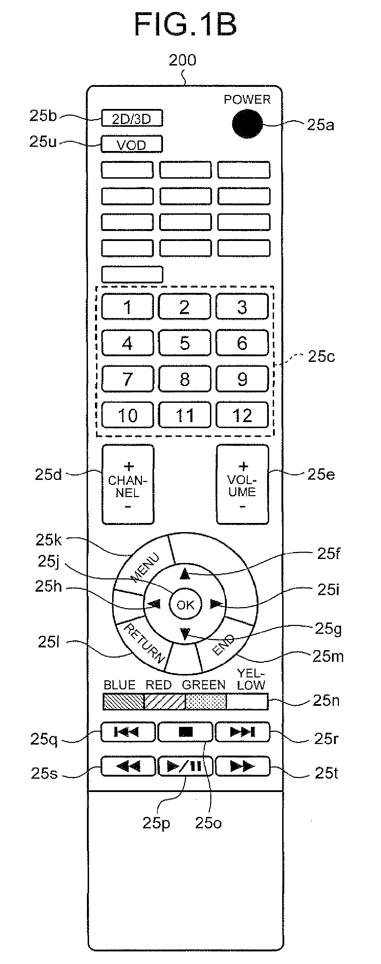

FIG. 1B is a plan view of an exterior of the remote controller 200. As illustrated in FIG. 1B, the remote controller 200 mainly comprises a power key 25a, a two dimensional/three dimensional converting key 25b, numeric keys 25c, a channel up/down key 25d, a volume control key 25e, an up cursor key 25f, a down cursor key 25g, a left cursor key 25h, a right cursor key 25i, an OK key 25j, a menu key 25k, a return key 251, an end key 25m, and color keys 25n in four colors (blue, red, green, and yellow).

The remote controller 200 also comprises a video-on-demand (VOD) key 25u for receiving a VOD service distributing video which the user wishes to watch at any time.

The remote controller 200 also comprises a replay stop key 25o, a replay/pause key 25p, a backward-direction skip key 25q, a forward-direction skip key 25r, a fast reverse key 25s, and a fast forward key 25t.

Referring back to FIG. 1A, the system controller 117 controls processes in the entire multi-channel receiver 100. More specifically, the system controller 117 may be a control circuit comprising a microcontroller, a central processor (CPU), a read-only memory (ROM), and a random access memory (RAM). The system controller 117 causes the microcontroller or the CPU to load computer programs stored in the ROM and like into the RAM, and sequentially executes the computer programs to perform an outputting process of control signals to the recording and replaying controller 118, and a displaying process of processing information related to a predetermined process of content data. The system controller 117 implements functions of a speed controller 117a, a setting module 117b, a continuous replay controller 117c, a selecting module 117d, and a display module 117e by sequentially executing the computer programs.

The recording and replaying controller 118 performs a predetermined process related to the content data multiplexed in each of the transport streams for Ch1 to ChN and the transport stream of programs provided by a network service of the server 300. The recording and replaying controller 118 of the embodiment performs a replaying process. Specifically, the recording and replaying controller 118 selects one of the content data multiplexed into the transport streams received by the tuners 102 to 110, the content data multiplexed into the transport stream received via the network I/F 119, and the content data recorded in the storage device 111, based on control signals received from the system controller 117, and outputs the content data thus selected to the MPEG decoder 114.

The recording and replaying controller 118 extracts content data from a transport stream, appends identifying information for identifying the content data to the extracted content data, and stores (records) the content data in the storage device 111. Examples of the identifying information include channel information indicating the channel of the program having the content data to be recorded, the name of the program having the content data to be recorded, the recording time and date at and on which the content data is recorded, and a replay history of the content data. This recording process is performed by the recording and replaying controller 118 in response to recording control signals received from the system controller 117.

Because the recording and replaying controller 118 can use a network service of the server 300, for the programs specified not to be recorded to the storage device 111 (details thereof will be described later), the recording and replaying controller 118 may record transcoded One Seg or Full Seg data to the storage device 111 as data used for displaying a thumbnail image based on control signals issued by the system controller 117.

The speed controller 117a controls the speed at which the recording and replaying controller 118 replays the content data. In this embodiment, when a user operates the remote controller 200 to select a channel for replaying the content data from a past program guide (a program guide for the programs stored in the storage device 111) displayed by the on-screen display module 115, and presses the fast forward key 25t on the remote controller 200, the speed controller 117a causes the recording and replaying controller 118 to fast-replay the content data of the selected channel from the beginning thereof (the content data with the oldest recording time and date) to the end thereof (the content data with the latest recording time and date) at a replay speed that is faster (e.g., 120 times faster) than a predetermined replay speed.

When the user presses the forward-direction skip key 25r on the remote controller 200 while the content data is being fast-replayed, the speed controller 117a performs program skipping in which the content data recorded next to the content data currently being fast-replayed is fast-replayed.

If the user presses the color key 25n on the remote controller 200 during a scene of interest while the content data is being fast-replayed, the setting module 117b specifies one or more replay positions in the content data at the timing at which the color key 25n is pressed. The setting module 117b also reads the identification information (the name of the program or the recording time and date) of the content data at the one or more replay positions thus specified from the storage device 111 via the recording and replaying controller 118, and stores the read identification information in the RAM in the system controller 117.

In this embodiment, a replay position is specified when the user presses the color key 25n on the remote controller 200 only once. However, the setting operation is not limited thereto. For example, the replay speed of the content data may be slowed down to replay the content data in slow motion when the color key 25n on the remote controller 200 is pressed once, and a replay position may be formally specified when the color key 25n on the remote controller 200 is pressed again. In this manner, the user can specify a replay position while the content data is replayed in slow motion. Therefore, the user can specify a desired replay position more precisely.

The continuous replay controller 117c controls the recording and replaying controller 118 to replay a plurality of pieces of data near the one or more replay positions specified by the setting module 117b (hereinafter, referred to as "partial content data") (e.g., data within a predetermined time range before or after a specified replay position) in the content data currently being fast-replayed at the predetermined replay speed in a continuous (sequential) manner. In this embodiment, as the partial content data, the continuous replay controller 117c reads the content data appended with identification information (recording time and date) within a predetermined time range from the identification information (recording time and date) stored in the RAM in the system controller 117 from the content data stored in the storage device 111, after the fast-replay of the content data is completed. The continuous replay controller 117c then controls the recording and replaying controller 118 to replay a plurality of pieces of partial content data thus read in a continuous manner. In this embodiment, the continuous replay controller 117c replays the partial content data continuously, but replaying of the partial content data is not so limited, and the partial data may be replayed with an intermission therebetween to allow some time for a seeking operation of the head of the recording medium.

In this embodiment, the continuous replay controller 117c controls to replay pieces of the partial content data in a continuous manner in the chronological order of the recording time and date, starting from a piece that is to be replayed within a predetermined time from a replay position selected by the selecting module 117d to be described later, after the fast-replay of the content data is completed.

To specify a replay position, the user presses the color key 25n on the remote controller 200 at a timing of the content data the user wishes to watch again later in time while the content data is being fast-replayed. The continuous replay controller 117c basically controls to start replaying the partial content data from the one or more replay positions specified by the setting module 117b. However, because the content data is being replayed at a high speed, e.g., 120 times faster, during the fast-replay of the content data, the replay position thus specified is not necessarily the replay position intended by the user.

In view o this, upon continuously replaying pieces of partial content data, the continuous replay controller 117c controls to start the continuous replay of partial content data from a position that seems to be the position that is actually intended by the user to be replayed. More specifically, if a replay position specified by the setting module 117b is a predetermined replay position (for example, if the specified replay position is near the beginning of the content data, or during a commercial in the content data), the continuous replay controller 117c controls to start replaying the partial content data near the position reversed from the specified replay position (e.g., the beginning of the content data or the beginning of the main program after the commercial).

When the user selects a desired content from a past program guide to replay the content data of the program at a predetermined speed, the multi-channel receiver 100 starts replaying the content data from the beginning of the content data (i.e., from a position recorded at the time when recording of the content data is started), or from a position recorded at a specified time. The time is specified based on the universal coordinated time (UTC).

If the forward-direction skip key 25r on the remote controller 200 is pressed while a piece of the partial content data is being replayed in a continuous manner, the continuous replay controller 117c stops replaying the piece of partial content data currently being replayed at a timing when the forward-direction skip key 25r is pressed, and moves on to replay the next piece of the partial content data.

If the selecting module 117d, which will be described later, does not select to continue replaying the partial content data after replaying of the partial content data is completed, the continuous replay controller 117c stops replaying the partial content data, and starts replaying the content data following the piece of the partial content data lastly replayed (the piece of partial content data just finished being replayed) from the content data stored in the storage device 111. In this embodiment, if continuous replaying of the partial content data is not selected and replaying of the partial content data is stopped, the continuous replay controller 117c reads the content data appended with the identification information (recording time and date) subsequent to the identification information (recording time and date) appended to the piece of the partial content data lastly replayed from the content data stored in the storage device 111, and replays the content data.

After the fast-replay of the content data is completed, the selecting module 117d selects a first replay position to be replayed from a list of replay positions displayed on the TV based on a user operation with the remote controller 200.

Every time the continuous replay controller 117c completes replaying a piece of partial content data, the selecting module 117d selects as to whether to continue replaying the partial content data or to replay the content data subsequent to the partial content data based on a user operation with the remote controller 200.

While the content data is being fast-replayed, the display module 117e reads the content data at a replay position specified by the setting module 117b (the content data appended with the identification information stored in the RAM in the system controller 117) from the storage device 111 via the recording and replaying controller 118, and generates a thumbnail image of the replayed image of the read content data. The display module 117e then displays the generated thumbnail image on the TV via the on-screen display module 115. Every time the setting module 117b specifies a replay position, the display module 117e generates a thumbnail image of the specified replay position, and displays the thumbnail image additionally on the TV.

The display module 117e also displays the identification information appended to the content data being fast-replayed or the identification information appended to the content data at a replay position specified by the setting module 117b on the TV while the content data is being fast-replayed.

If at least one replay position has been specified by the setting module 117b by the time fast-replaying of the content data is completed, the display module 117e displays the identification information appended to the content data at the specified replay position on the TV via the on-screen display module 115 as a list of the set replay positions.

While pieces of partial content data are being continuously replayed, the display module 117e reads the content data at a replay position specified by the setting module 117b (the content data appended with the identification information stored in the RAM in the system controller 117) from the storage device 111 via the recording and replaying controller 118, and generates a thumbnail image of the replayed image of the read content data. The display module 117e then displays the generated thumbnail image on the TV via the on-screen display module 115.

While pieces of partial content data are being continuously replayed, the display module 117e displays a thumbnail image generated from the same content data as the piece of partial content data currently being replayed (in other words, the content data appended with the identification information that is same as that appended to the partial content data currently being replayed) in an emphasized manner, such as by changing the color of the frame of the thumbnail image, among the thumbnail images displayed on the TV.

The display module 117e also displays the identification information appended to the content data at replay positions specified by the setting module 117b on the TV while pieces of partial content data are being replayed continuously.

Every time replaying of a piece of partial content data is completed, the display module 117e also displays a message for selecting as to whether to continue replaying the partial content data or to start replaying the content data recorded subsequent to the partial content data on the TV.

The network I/F 119 connects to the communication network NW such as a local area network (LAN) or the Internet in a communicative manner. By connecting to the communication network NW via the network I/F 119, the multi-channel receiver 100 can receive programs provided by a video-on-demand network service of the server 300. The network I/F 119 sends the transport stream of the program provided by the network service of the server 300 to the EPG processor 112 and to the recording and replaying controller 118. A service to be provided by a network service of the server 300 may be notified and specified to the server 300 via the network I/F 119 under the control of the recording and replaying controller 118.

An operation of the system controller 117 performed to continuously replay the partial content data will now be described.

First, the outline of a replaying operation of the partial content data performed by the multi-channel receiver 100 of the embodiment will be described with reference to FIG. 3. FIG. 3 is a flowchart of a replaying operation of the partial content data performed by the multi-channel receiver 100 of the embodiment.

When the remote controller 200 is operated and a channel for which the content data is to be fast-replayed is selected, the speed controller 117a controls the recording and replaying controller 118 to cause the content data on the selected channel to be fast-replayed (S301). If the color key 25n on the remote controller 200 is pressed while the content data is being fast-replayed, the setting module 117b specifies a replay position in the content data currently being fast-replayed at the timing the color key 25n is pressed (S302) . Once fast-replaying of the content data is completed, the continuous replay controller 117c starts replaying a plurality of pieces of partial content data that are to be replayed within a predetermined time from the replay positions specified by the setting module 117b at a predetermined replay speed in a continuous manner (S303).

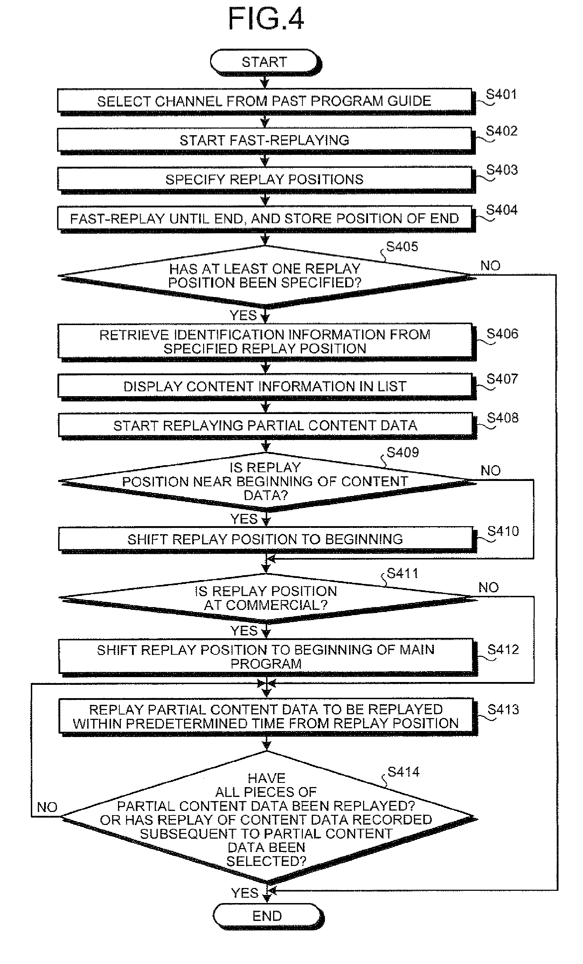

This replaying operation of the partial content data performed by the multi-channel receiver 100 of the embodiment will now be described in detail with reference to FIG. 4. FIG. 4 is a detailed flowchart of the replaying operation of the partial content data performed by the multi-channel receiver 100 of the embodiment.

When a user selects a channel for replaying the content data from a past program guide displayed by the on-screen display module 115 (S401), the speed controller 117a starts fast-replaying the content data on the selected channel from the beginning to the end of the content data (S402).

In this embodiment, the speed controller 117a fast-replays the content data on a selected single channel. However, replaying of the content data is not limited thereto, and the content data on a plurality of channels may be fast-replayed, for example.

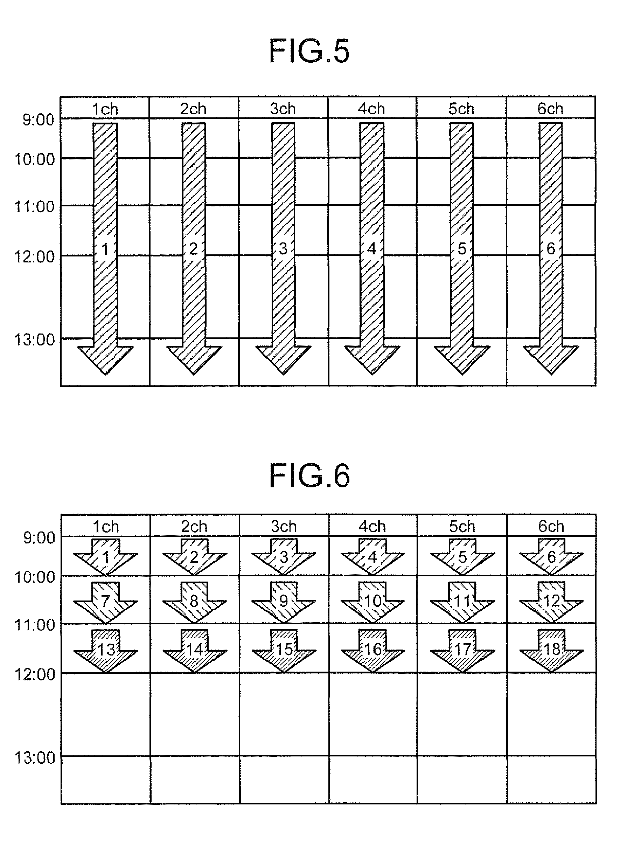

FIGS. 5 and 6 are schematic diagrams of examples of ways of fast-replaying the content data on a plurality of channels. In this embodiment, the speed controller 117a fast-replays the content data on a single channel selected from the past program guide, and ends the fast-replay of the content data. However, when programs on a plurality of channels are recorded simultaneously, the speed controller 117a replays the content data on a first channel until the end thereof, and fast-replays the content data on the next channel instead of ending the fast-replay upon completion of fast-replaying of the content data on the first channel. This process is repeated for all of the channels recorded simultaneously. In other words, the speed controller 117a fast-replays the content data on all the channels (1 to 6ch) that are simultaneously recorded between 9:00 to 13:00 in the order of "1" to "6" indicated by the arrows in FIG. 5.

Alternatively, when the programs on a plurality of channels are simultaneously recorded, the speed controller 117a may at first fast-replay the content data on a single channel in a certain time slot, then fast-replay the content data on the next channel in the same time slot. This process is repeated for all of the channels simultaneously recorded in the same time slot. After completion of fast-replaying of the content data on all of the channels that are simultaneously recorded in a certain time slot, the speed controller 117a fast-replays the content data on all of the channels that are simultaneously recorded in the next time slot in the same manner. In other words, the speed controller 117a fast-replays the content data on all the channels (1 to 6ch) simultaneously recorded between 9:00 to 12: 00 in the order of "1" to "18" indicated by the arrows in FIG. 6.

Referring back to FIG. 4, the setting module 117b specifies a replay position in the content data at the timing at which the color key 25n on the remote controller 200 is pressed while the content data is being fast-replayed (S403).

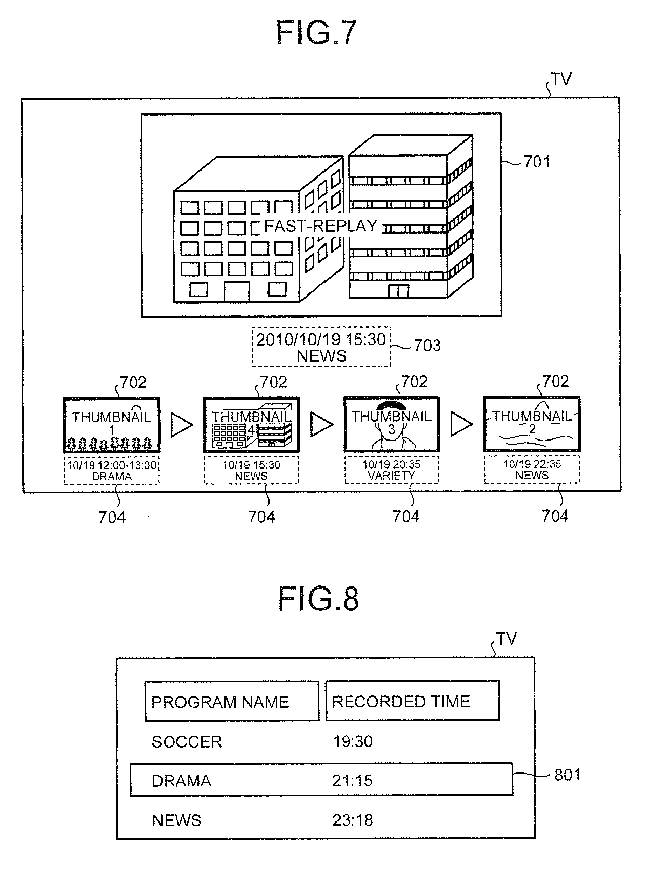

FIG. 7 is a schematic diagram of an example of thumbnail images displayed while the content data is being fast-replayed. Every time the setting module 117b specifies a replay position, the display module 117e reads the content data at the specified replay position from the storage device 111, and generates a thumbnail image of the replayed image of the read content data. The display module 117e then displays generated thumbnail images 702 one next to each other via the on-screen display module 115 under content data 701 currently being fast-replayed by the recording and replaying controller 118. If the generated thumbnail images 702 do not fit in the TV screen, the display module 117e removes the firstly generated thumbnail image 702 from the TV screen. The display module 117e displays identification information 703 appended to the content data 701 currently being fast-replayed under the content data 701 that is being fast-replayed, and displays identification information 704 appended to the content data at the specified replay positions under the generated thumbnail images 702 via the on-screen display module 115.

Referring back to FIG. 4, once the content data on the selected channel is fast-replayed from the beginning to the end (S404), the continuous replay controller 117c determines if the setting module 117b has specified at least one replay position (S405). If the setting module 117b has not specified any replay position (No at S405), the continuous replay controller 117c ends the process without performing continuous replay of the partial content data.

On the contrary, if the setting module 117b has specified at least one replay position (Yes at S405), the display module 117e obtains the identification information appended to the content data at the specified replay position (S406). The display module 117e then displays a list of the obtained identification information on the TV via the on-screen display module 115 (S407).

FIG. 8 is a schematic diagram of an example of display of a list of the identification information. As illustrated in FIG. 8, the display module 117e displays the name of the program and the recording time and date of the content data at the specified replay position as identification information on the TV via the on-screen display module 115. In this embodiment the display module 117e also displays on the TV a cursor 801 for selecting the identification information related to the partial content data to be replayed first from the list of the identification information displayed on the TV via the on-screen display module 115.

Referring back to FIG. 4, when the selecting module 117d selects a replay position from the list of identification information displayed on the TV based on an operation of the cursor 801, the continuous replay controller 117c starts replaying the partial content data in a continuous manner (S408).

First, the continuous replay controller 117c determines if, among the specified replay positions, each of the replay position selected by the selecting module 117d and the replay positions subsequent to the replay position thus selected are located near the beginning of the content data (S409). In this embodiment, the continuous replay controller 117c determines if a selected replay position is located near the beginning of the content data based on whether the identification information (recording time and date) appended to the content data at the selected replay position is within a predetermined time from the oldest recording time and date appended to, as identification information, the content data of the same program as the content data at the selected replay position.

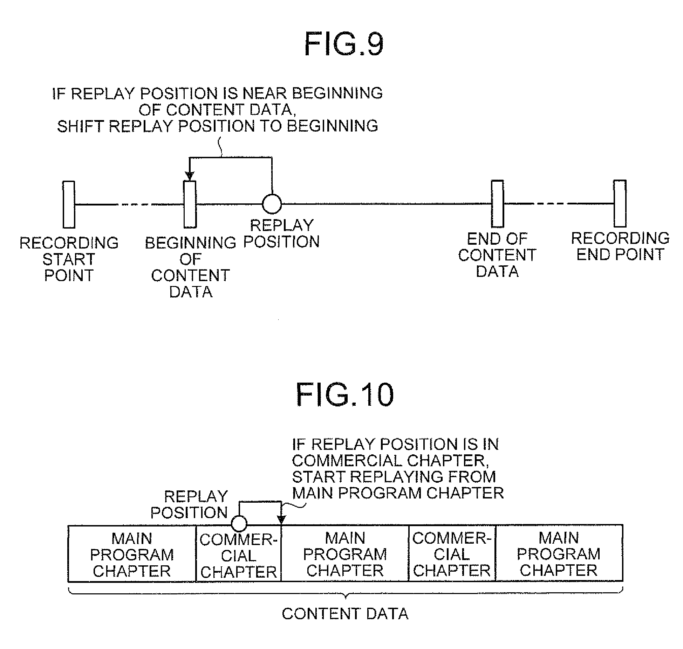

If the continuous replay controller 117c determines that the replay position is located near the beginning of the content data (Yes at S409), the continuous replay controller 117c shifts the replay position to the beginning of the content data as illustrated in FIG. 9 (S410). If the continuous replay controller 117c determines that the replay position is not near the beginning of the content data (No at S409), or after the replay position is shifted to the beginning of the content data (S410), the continuous replay controller 117c determines if the replay position is at a commercial contained in the content data (S411) . The content data contains information for delimiting commercial chapters and main program chapters contained in the content data. This information is used in determining if the replay position is in a commercial chapter.

If the continuous replay controller 117c determines that the replay position is at a commercial contained in the content data (Yes at S411), the continuous replay controller 117c shifts the replay position to the beginning of the main program as illustrated in FIG. 10 (S412). If the continuous replay controller 117c determines that the replay position is not at a commercial (No at S411), or after the replay position is shifted to the beginning of the main program (S412), the continuous replay controller 117c replays the partial content data to be replayed within a predetermine time from the replay position (S413).

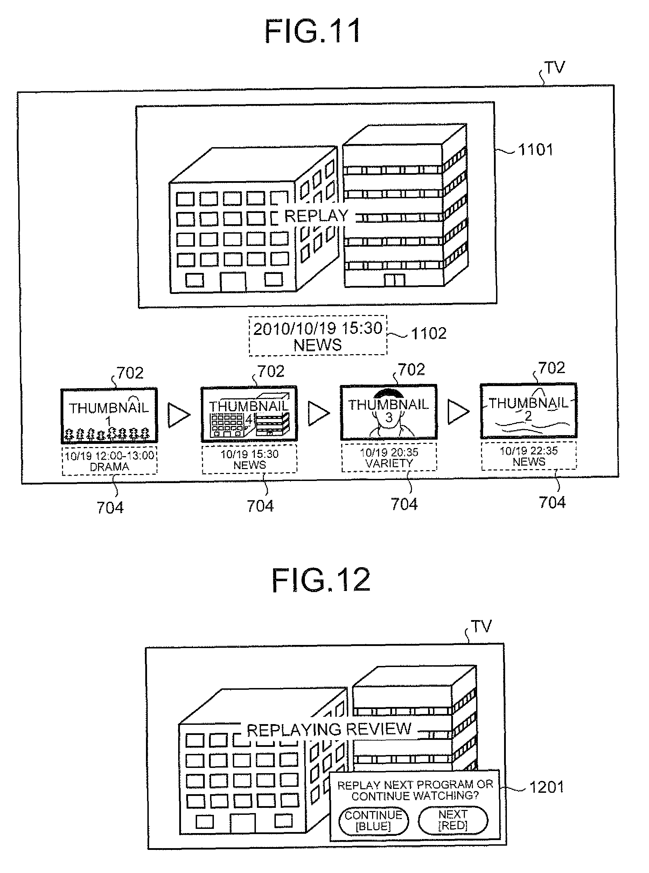

FIG. 11 is a schematic diagram of an example of how the thumbnail images are displayed while the partial content data is being replayed. While the pieces of partial content data are being replayed continuously, the display module 117e displays generated thumbnail images 702 next to each other under partial content data 1101 currently being replayed by the recording and replaying controller 118 in the same manner as while the content data is being fast-replayed. If the generated thumbnail images 702 do not fit in the TV screen, the display module 117e displays the thumbnail images 702 from those that are generated from the content data appended with identification information having recording time and date near the recording time and date, which are identification information, appended to the partial content data currently being replayed on the TV. Among the thumbnail images displayed on the TV, the display module 117e also displays a thumbnail image generated from the same content data as the partial content data 1101 currently being displayed in an emphasized manner. The display module 117e also displays identification information 1102 appended to the partial content data 1101 currently being replayed under the partial content data 1101 currently being replayed, and displays identification information 704 appended to the content data at specified replay positions under the generated thumbnail images 702 via the on-screen display module 115.

FIG. 12 is a schematic diagram of an example of a selection dialog displayed every time replaying of a piece of partial content data is completed. As illustrated in FIG. 12, every time replaying of a piece of partial content data is completed, the display module 117e displays a message 1201 requesting a user to select whether to continue replaying the partial content data or to replay the content data that is recorded subsequent to that piece of partial content data on the TV. The selecting module 117d selects whether to replay the partial content data or to replay the content data recorded subsequent to that piece of partial content data based on an operation performed on a button included in a message 1200 displayed on the TV.

Referring back to FIG. 4, the continuous replay controller 117c determines if replaying of all pieces of the partial content data has been completed, or if the selecting module 117d has selected to replay the content data recorded subsequently to the pieced of partial content data (S414). If replaying of all pieces of the partial content data has not been completed, and the selecting module 117d has selected to continue replaying the partial content data (No at S414), the continuous replay controller 117c continues to replay the partial content data (S413). On the contrary, if replaying of all pieces of the partial content data has been completed, or if the selecting module 117d has selected to replay the content data recorded subsequently to the partial content data (Yes at S414), the continuous replay controller 117c ends replaying the partial content data.

As described above, according to the embodiment, the multi-channel receiver 100 fast-replays recorded content data at a higher replay speed than a predetermined replay speed, specifies a plurality of replay positions in the content data while the content data is being fast-replayed, and continuously replays pieces of partial content data to be replayed within a predetermined time from each of the replay positions thus specified in the content data at the predetermined replay speed after the fast-replay of the content data is completed. In this manner, when there are a plurality of parts that the user wants to watch in the recorded content data, the user can watch only the parts user wants to watch in a continuous manner, and can freely specify a part where the user wants to watch in detail from the recorded data. Therefore, only a plurality of desired parts of recorded content data can be replayed in a continuous manner.

A computer program may be executed on a computer to realize the same function as the multi-channel receiver 100 of the embodiment. The computer program may be provided as being stored in advance in a ROM or the like. The computer program may also be provided as being stored in a computer-readable recording medium, such as a compact disk read-only memory (CD-ROM), a flexible disk (FD), a compact disk recordable (CD-R), and a digital versatile disk (DVD), as a file in an installable or an executable format.

Further, the computer program may be stored in a computer connected via a network such as the Internet to be made available for downloads via the network. Furthermore, the computer program may be provided or distributed over a network such as the Internet.

The computer program has a modular structure comprising each of the modules described above (the speed controller 117a, the setting module 117b, the continuous replay controller 117c, the selecting module 117d, and the display module 117e). In the actual hardware, by a CPU (processor) loading the computer program from the ROM into the main memory and executing the computer program, modules such as the speed controller 117a, the setting module 117b, the continuous replay controller 117c, the selecting module 117d, and the display module 117e are implemented on the main memory.

The various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A replay device (100) comprising:
a replaying module (118) configured to replay content data;
a speed controller (117a) configured to control a replay speed of the content data replayed by the replaying module (118);
a setting module (117b) configured to set a plurality of replay positions in the content data while the replaying module (118) is fast-replaying the content data at a replay speed higher than a predetermined replay speed; and
a continuous replay controller (117c) configured to control the replaying module (118) to replay a plurality of pieces of data near the replay positions set by the setting module (117b) in the content data at the predetermined replay speed.

2. The replay device (100) of Claim 1, wherein the continuous replay controller (117c) is configured to control the replaying module (118) to continuously replay the pieces of data at the predetermined replay speed.

3. The replay device (100) of Claim 1 or 2, further comprising a selecting module (117d) configured to select whether to continue replaying other pieces of data every time replaying of one of the piece of data is completed, wherein
when continuing replaying of other pieces of data is not selected, the replaying module (118) stops replaying the pieces of data, and replays content data subsequent to the data replaying of which is completed in the content data.

4. The replay device (100) of one of Claims 1 to 3, further comprising a display module (117e) configured to display a thumbnail image of an image of content data replayed from each of the replay positions set by the setting module (117b) while the content data is being fast-replayed.

5. The replay device (100) of Claim 4, wherein the display module (117e) is configured to display identification information that identifies content data at the replay positions set by the setting module (117b) while the content data is being fast-replayed.

6. The replay device (100) of Claim 4 or 5, wherein the display module (117e) is configured to display a thumbnail image of an image replayed from content data at each of the replay positions set by the setting module (117b) while the pieces of data are being replayed.

7. The replay device (100) of Claim 6, wherein the display module (117e) is configured to display identification information that identifies content data at the replay positions set by the setting module (117b) while the pieces of data are being replayed.

8. The replay device (100) of Claim 6 or 7, wherein the display module (117e) is configured to display, among thumbnail images of images replayed from content data at the replay positions set by the setting module (117b), a thumbnail image of an image replayed from content data same as the data currently being replayed in an emphasized manner.

9. The replay device (100) of one of Claims 1 to 8, wherein, if a replay position set by the setting module (117b) is at a predetermined position, the continuous replay controller (117c) replays data near a position reversed from the replay position in the content data.

10. A replay method comprising:
replaying content data;
controlling a replay speed of the content data;
setting a plurality of replay positions in the content data while the content data is being fast-replayed at a replay speed higher than a predetermined replay speed; and
replaying a plurality of pieces of data near the replay positions set at the setting in the content data at the predetermined replay speed.
